# FASCICULE DE BREVET EUROPEEN

(11) **EP 2 709 965 B1**
(45) Date de publication et mention de la délivrance du brevet: **01.01.2020**
(21) Numéro de dépôt: 12722135.6
(22) Date de dépôt: 15.05.2012
(51) Int. Cl.: C04B 26/04, C04B 28/02, C04B 40/00, C09D 5/02

(54) **COMPOSITION D'ENDUIT DE RAGRÉAGE POUR L'INDUSTRIE DU BÂTIMENT**
NACHBEARBEITUNGSPUTZ-ZUAMMENSETZUNG FÜR DIE BAUINDUSTRIE
FINISHING COATING COMPOSITION FOR THE BUILDING INDUSTRY

(30) Priorité: 16.05.2011 EP 11004031
(43) Date de publication de la demande: 26.03.2014
(73) Titulaire: Sika Technology AG, 6340 Baar (CH)
(72) Inventeur: GUYOT, Christophe, F-69005 Lyon (FR); GUILLOT, Laurent, F-27200 Vernon (FR); JOUEN, Thierry, F-60240 Le Mensnil Theribus (FR); DUVAL, Matthieu, F-27120 Pacy sur Eure (FR)
(74) Mandataire: Sika Patent Attorneys
(86) Numéro de dépôt international: PCT/EP2012/059065
(87) Numéro de publication internationale: WO 2012/156421

(56) Documents cités:
- EP-A1- 2 251 376
- DE-A1-102006 046 860
- FR-A1- 2 930 258

## Description

### Domaine technique

La présente invention se rapporte à une composition destinée à l'industrie du bâtiment, avantageusement une composition destinée à enduire ou ragréer des surfaces planes telles que des murs.

### Etat de la technique

Il existe sur le marché des compositions de type pâte de ragréage à additionner de ciment ou de plâtre, vendues sous le nom commercial de Sider Cim® et Sider Cim 421® par la demanderesse. Ces compositions sont commercialisées pour des travaux aussi bien d'intérieur que d'extérieur lorsque additionnées de ciment, pour des travaux d'intérieur lorsque additionnées de plâtre. Les domaines d'application sont variés : ragréage, débullage, lissage des murs ou plafonds en béton permettant d'éliminer les défauts de planimétrie ou d'aspect.

Afin de répondre aux exigences du marché, la demanderesse a cherché à optimiser et améliorer ses produits. Cette amélioration vise en particulier à augmenter le rendement de recouvrement de ces compositions.

Actuellement, les épaisseurs préconisées pour une bonne utilisation de la composition Sider Cim® sont de 0 à 5 mm lorsqu'elle est mélangée à du ciment et de 0 à 50 mm lorsqu'elle est mélangée à du plâtre et les épaisseurs préconisées pour une bonne utilisation de la composition Sider Cim® 421 sont de 1,5 à 10 mm lorsqu'elle est mélangée à du ciment et de 1,5 à 50 mm lorsqu'elle est mélangée à du plâtre. En outre, la consommation en composition est d'environ 0,8 kg de pâte/m²/mm d'épaisseur pour la composition de Sider® Cim ou de Sider Cim® 421.

Le document RU2375326 fait état d'une composition destinée à enduire et niveler des surfaces en béton. Cette composition comprend de 61,37 à 65,75% de ciment, de 2,0 à 3,0% d'argile, de 3,0 à 34,0% d'eau, de 1,0 à 1,4% de colle d'os, de 0,03 à 0,05% de carboxyméthylcellulose et de 0,6 à 0,8% de superplastifiant C-3, à savoir un super plastifiant à base de naphtalène. Cette composition permet une amélioration de l'adhérence de l'enduit sur la surface à traiter.

Il subsiste donc un réel besoin de pouvoir disposer d'une composition destinée à l'industrie du bâtiment, en particulier un mortier, un béton ou une pâte de ragréage, permettant d'augmenter les rendements de mise en œuvre par rapport aux compositions connues, et permettant par conséquent de réduire les coûts de revient, tout en améliorant la facilité d'application du produit et en préservant, voire en améliorant, l'aspect visuel rendu du produit après application.

L'augmentation du rendement correspond à une baisse significative de la consommation de produit au moment de son application pour recouvrir une même surface par rapport aux produits connus Sider Cim® et Sider Cim 421®.

La demanderesse a donc cherché à améliorer la formulation de ses compositions afin d'augmenter le rendement de celles-ci.

L'invention vise, par conséquent, à disposer d'une composition destinée à l'industrie du bâtiment ayant les mêmes fonctions que les compositions connues sur le marché sous le nom de Sider Cim® et Sider Cim 421®, c'est-à-dire conservant les mêmes propriétés rhéologiques, tout en permettant d'augmenter la surface recouverte lors de sa mise en œuvre. Il est en effet primordial que la composition selon l'invention conserve les caractéristiques rhéologiques étroitement associées à sa fonction et son utilisation. La présente invention vise donc à répondre à un problème technique complètement différent de celui auquel répond la demande de brevet RU2375326. EP2251376A1 divulgue une composition pour l'application dans les compositions à base de liants hydrauliques. FR2930258A1 divulgue une composition pour l'application comme enduit de finition. DE102006046860A1 divulgue une composition pour fabriquer un enduit.

La Demanderesse a ainsi découvert de façon tout à fait surprenante une composition répondant à toutes ces exigences.

L'invention concerne ainsi une composition comprenant en % exprimé en poids par rapport au poids total de ladite composition):
- 0,2 à 10% d'au moins un superplastifiant choisi parmi les superplastifiants à base d'acides carboxyliques constitué d'une chaîne principale de polycarboxylate sur laquelle sont greffées des groupements polyéther;
- 0,5 à 5% d'au moins un agent épaississant d'origine inorganique et/ou organique;
- 5 à 30 % d'au moins une dispersion aqueuse de copolymères ou latex synthétique issus de la copolymérisation d'au moins deux monomères choisis parmi l'éthylène, le propylène, le butylène, l'isoprène, le butadiène, le styrène, l'acrylonitrile, l'acide acrylique, l'acide méthacrylique, l'alkyl ester d'acide acrylique, l'alkyl ester d'acide méthacrylique, l'ester vinylique, l'acrylate de butyle, l'acrylate de 2-éthylhexyl, le méthacrylate de méthyle et le chlorure de vinyle;
- 30 à 70% d'au moins une charge minérale, avantageusement choisie parmi les charges minérales de moyenne ou de fine granulométrie c'est-à-dire < à 5mm, ladite charge étant choisie parmi les charges calcaires; et
- 0 à 60% d'eau, avantageusement de 20 à 60% ; qui permet de répondre favorablement aux exigences du marché.

Selon un mode de réalisation, la composition selon l'invention comprend en % exprimé en poids par rapport au poids total de ladite composition:
- 0,2 à 10% d'au moins un superplastifiant choisi parmi les superplastifiants à base d'acides carboxyliques constitué d'une chaîne principale de polycarboxylate sur laquelle sont greffées des groupements polyéther;
- 0,5 à 5% d'au moins un agent épaississant d'origine inorganique et/ou organique, ledit agent épaississant d'origine organique étant choisi parmi les dérivés cellulosiques, avantageusement parmi les éthers de cellulose, la gomme de guar, l'amidon, la gomme arabique, les alginates, le xanthane, la carraghénine et les oxydes de polyéthylène et ledit agent d'origine inorganique étant choisi parmi les argiles, avantageusement parmi, les bentonites, les sepiolites et les hectorites ;
- 5 à 30 % d'au moins une dispersion aqueuse de copolymères ou latex synthétique issus de la copolymérisation d'au moins deux monomères choisis parmi l'éthylène, le propylène, le butylène, l'isoprène, le butadiène, le styrène, l'acrylonitrile, l'acide acrylique, l'acide méthacrylique, l'alkyl ester d'acide acrylique, l'alkyl ester d'acide méthacrylique, l'ester vinylique, l'acrylate de butyle, l'acrylate de 2-éthylhexyl, le méthacrylate de méthyle et le chlorure de vinyle;
- 30 à 70% d'au moins une charge minérale, avantageusement choisie parmi les charges minérales de moyenne ou de fine granulométrie c'est-à-dire < à 5mm, ladite charge pouvant être choisie parmi la poudre de marbre, la calcite broyée, et la craie broyée; et
- 0 à 60% d'eau, avantageusement de 20 à 60%.

Cette composition est commercialisable directement sous la forme d'une base aqueuse, ladite composition ayant alors l'aspect d'une pâte. Elle comprend jusqu'à 60% d'eau, de préférence de 20 à 60% d'eau, encore plus avantageusement de 25% à 50% d'eau, le % étant exprimé en poids par rapport au poids total de ladite composition.

La composition selon l'invention peut comprendre, en outre, au moins un composé choisi parmi les agents biocides, les agents anti-mousse, la soude, la potasse caustique et leurs mélanges.

Selon un autre mode de réalisation, la composition selon l'invention est constituée de en % exprimé en poids par rapport au poids total de ladite composition:
- 0,2 à 10% d'au moins un superplastifiant choisi parmi les superplastifiants à base d'acides carboxyliques constitué d'une chaîne principale de polycarboxylate sur laquelle sont greffées des groupements polyéther;
- 0,5 à 5% d'au moins un agent épaississant d'origine inorganique et/ou organique, ledit agent épaississant d'origine organique étant choisi parmi les dérivés cellulosiques, avantageusement parmi les éthers de cellulose, la gomme de guar, l'amidon, la gomme arabique, les alginates, le xanthane, la carraghénine et les oxydes de polyéthylène et ledit agent d'origine inorganique étant choisi parmi les argiles, avantageusement parmi, les bentonites, les sepiolites et les hectorites ;
- 5 à 30 % d'au moins une dispersion aqueuse de copolymères ou latex synthétique issus de la copolymérisation d'au moins deux monomères choisis parmi l'éthylène, le propylène, le butylène, l'isoprène, le butadiène, le styrène, l'acrylonitrile, l'acide acrylique, l'acide méthacrylique, l'alkyl ester d'acide acrylique, l'alkyl ester d'acide méthacrylique, l'ester vinylique, l'acrylate de butyle, l'acrylate de 2-éthylhexyl, le méthacrylate de méthyle et le chlorure de vinyle;
- 30 à 70% d'au moins une charge minérale, avantageusement choisie parmi les charges minérales de moyenne ou de fine granulométrie c'est-à-dire < à 5mm, ladite charge pouvant être choisie parmi la poudre de marbre, la calcite broyée, et la craie broyée;
- 0 à 60% d'eau, avantageusement de 20 à 60% ;
- 0,01 à 2% d'au moins un agent anti-mousse conforme à l'invention ;
- 0,1 à 3% de soude et/ou de potasse caustique ;
- 0,1 à 0,5% d'au moins un agent biocide, conforme à l'invention.

Pour obtenir le résultat escompté, la composition selon l'invention nécessite au moment de son application, l'ajout d'une quantité de liant minéral plus importante qu'avec les compositions de pâtes de ragréage présentes actuellement sur le marché afin de conserver les caractéristiques rhéologiques nécessaires à une utilisation appropriée et efficace.

Ainsi, pour une même quantité de pâte de ragréage, de béton ou de mortier mis en œuvre, la quantité de liant minéral requise est plus importante dans le cas de l'utilisation de la composition selon l'invention. Il en résulte un volume préparé de composition selon l'invention, additivée en liant minéral, plus important, permettant de traiter une plus grande surface.

L'utilisation de la composition selon l'invention additivée en liant minéral a ainsi l'avantage de baisser le coût du mètre carré traité par rapport à l'utilisation d'une pâte de ragréage de l'art antérieur, les liants minéraux évoqués ci-après étant généralement moins chers que les composés de la composition selon l'invention.

La composition selon l'invention rend ainsi possible le recouvrement de 20 à 30% de surface supplémentaire par rapport à la surface recouvrable par l'utilisation des compositions actuellement commercialisées. Elle a, en outre, l'avantage d'avoir une absorption capillaire faible, une meilleure applicabilité et une meilleur résistance mécanique que les compositions de formulation proches telles que les compositions de Sider Cim® et Sider Cim 421®.

### Description de l'invention

On entend par « mortier » selon la présente invention, un mélange de (i) liant, (ii) de charges, en particulier de charges à granulométrie moyenne à fine, (iii) d'eau et (iv) éventuellement d'additifs. Le mortier est utilisé en maçonnerie comme élément de liaison, de scellement ou comme enduit. Lorsque la charge s'avère être une charge à granulométrie supérieure, on parle alors de « béton ».

On entend par « charge à granulométrie supérieure», les gravillons et/ou graviers et/ou cailloux de granulométrie ≥ à 5 mm. Le gravier peut être, en particulier, choisi parmi les graviers de rivière, les graviers à grains ronds et polis, les graviers concassés.

On entend par « charge à granulométrie moyenne», le sable ou le sablon de granulométrie comprise entre 0,05 mm et 5 mm (bornes non incluses), avantageusement entre 0,5 et 5 mm, encore plus avantageusement entre 0,5 et 2 mm (bornes incluses).

On entend par « charge à granulométrie fine », les matériaux choisis parmi les poudres calcaires de granulométrie ≤ à 0,05 mm.

On entend par « liant minéral », selon la présente invention, un matériau pulvérulent qui:
a) dans le cas d'un liant hydraulique, gâché avec de l'eau, forme une pâte qui fait prise et durcit par suite de réactions et de processus d'hydratation, et qui après durcissement, conserve sa résistance et sa stabilité même sous l'eau. On peut citer, par exemple, le ciment Portland, le ciment alumineux, ou encore le laitier de haut fourneau qui constitue un liant hydraulique latent : ces exemples font tous partie de l'invention,
b) dans le cas d'un liant pouzzolanique, gâché avec de l'eau et en présence de portlandite (Ca(OH)₂), forme une pâte qui fait prise et durcit par suite de réactions pouzzolaniques. On peut citer, par exemple, les fumées de silice, les cendres volantes.
c) dans le cas d'un liant aérien, gâché avec de l'eau, forme une pâte qui fait prise et durcit par suite de réactions avec le dioxyde de carbone. On peut citer, par exemple, la chaux aérienne.
d) dans le cas d'un liant à base de sulfate de calcium, gâché avec de l'eau, forme une pâte qui fait prise et durcit par recristallisation et séchage.
Le « liant minéral » est donc choisi parmi les liants a) à d) définis ci-dessus. Sont inclus, en outre, dans le terme de « liant minéral » toute combinaison d'au moins deux de ces liants a) à d).

On entend par « superplastifiant » des polymères de synthèse fabriqués spécialement pour l'industrie du bâtiment. Les superplastifiants appartiennent à une nouvelle classe de réducteurs d'eau chimiquement différente des réducteurs d'eau normaux et capables de réduire la quantité d'eau de mélange de 30 %. On distingue quatre familles de superplastifiants : les superplastifiants à base de naphtalène, les superplastifiants à base de mélamine, les polyacrylates et les superplastifiants à base d'acides polycarboxyliques.

On entend par « agent épaississant », un agent viscosant et/ou un agent de modification de la limite d'écoulement (généralement pour accroître la viscosité et/ou la limite d'écoulement).

On entend par « agent biocide », selon la Directive du Parlement européen et du Conseil n° 98/8/CE du 16 février 1998 concernant la mise sur le marché des produits biocides (JOCE n° L 123 du 24 avril 1998) une substance active destinée à détruire, repousser ou rendre inoffensifs les organismes nuisibles, à en prévenir l'action ou à les combattre de toute autre manière, par une action chimique ou biologique.

La directive présente dans son annexe V une « *liste exhaustive des vingt-trois types de produits, comprenant une série indicative de descriptions pour chaque type ». La directive prévoit une sous-définition du « produit biocide à faible risque » qui est « un produit biocide qui ne contient comme substances actives qu'une ou plusieurs des substances énumérées à l'annexe I A et qui ne contient aucune substance préoccupante. Dans les conditions d'utilisation, ce produit biocide ne présente qu'un faible risque pour les êtres humains, les animaux et l'environnement ».*

Ainsi, dans la présente, l'agent biocide peut être un biocide choisi dans le groupe comprenant les sels d'ammonium quaternaires (les composés d'ammonium quaternaire (benzylakyldiméthyl (alkyles de C8-C22, saturés et insaturés, et alkyl de suif, alkyl de coco et alkyl de soja) chlorures, bromures ou hydroxydes), les composés organo-soufrés, les sels de cuivre, les produits phénoliques chlorés, les amines et l'acroléine.

A titre d'exemple spécifique de d'agents biocides utilisable dans le cadre de la présente invention, on peut citer notamment le bromure de lauryldiméthylbenzylammonium, le chlorure d'alkyldiméthybenzyl ammonium, le chlorure de dioctyldiméthyl ammonium, le 2-méthyl-2H-isothiazole-3-one, le 1,2-benzisothiazole-3(2H)-one et l''éthidium.

De préférence, l'agent biocide est choisi dans le groupe comprenant le 2-méthyl-2H-isothiazole-3-one et le 1,2-benzisothiazole-3(2H)-one.

La composition selon l'invention comprend au moins un superplastifiant. Le superplastifiant conforme à l'invention est un superplastifiant à base d'acides carboxyliques, constitué d'une chaîne principale de polycarboxylate sur laquelle sont greffées des groupements polyéther. De telles molécules sont décrites dans le brevet EP 1 138 697 A1.

Les superplastifiants selon l'invention sont des superplastifiants de nouvelle génération comprenant des composés de type dispersants à structure peigne.

Ces dispersants peuvent porter des fonctions ioniques de type acide carboxylique comme l'acide (méth)acrylique ou l'acide maléique et des chaînons pendants de type (alkoxy)polyalkylène glycol, en particulier (alkoxy)polyéthylène glycol, (alkoxy)polypropylène glycol ou une combinaison de ces deux types, ou d'autres chainons de préférence hydrosolubles.

Ainsi, les dispersants, obtenus par polymérisation de l'acide (méth)acrylique ou l'un de ses sels, de l'acide maléique ou l'un de ses sels ou leur mélange avec un ester ou une amine d'acide mono(méth)acrylique et d'(alkoxy)polyalkylène glycol sont, par exemple, divulgués dans l'EP 0 753488. Ce type de dispersant peut également être obtenu par une réaction de polymérisation analogue où le polymère d'acide (méth)acrylique et/ou d'acide maléique sont soumis à une réaction d'estérification et/ou d'amidation avec des (alkoxy)polyalkylène glycols à terminaisons hydroxy ou amine.

On distingue, par exemple, les superplastifiants choisis parmi les polyacides (méth)acryliques portant (i) des fonctions ioniques de type carboxylique et/ou (ii) des chaînons pendants de type hydrosolubles, tels que des (alkoxy)polyalkylènes glycols, avantageusement de type (alkoxy)polyéthylène glycol ou (alkoxy)polypropylène glycol.

Le terme (alkoxy)polyalkylène glycol couvre les alkoxypolyalkylène glycosl et les polyalkylènes glycols.

On peut citer, par exemple, comme superplastifiants conformes à l'invention, les superplastifiants vendus sous la marque Sika® Viscocrete® par Sika.

La quantité de superplastifiant dans la composition selon l'invention est de 0,2 à 10% en poids par rapport au poids total de ladite composition.

La composition selon l'invention comprend, en outre, au moins un agent épaississant choisi parmi les agents épaississants d'origine organique et inorganique.

On peut citer, par exemple, comme épaississant d'origine organique les dérivés cellulosiques tels que les éthers de cellulose solubles dans l'eau, en particulier les carboxyméthylcellulose, méthylcellulose, éthylcellulose, hydroxyéthylméthylcellulose, hydroxypropyléthylcellulose hydroxyéthylcellulose et hydroxypropylméthylcellulose, la gomme de guar, l'amidon, la gomme arabique, les alginates, le xanthane, la carraghénine et les oxydes de polyéthylène.

On peut citer, par exemple, comme agent épaississant d'origine inorganique les agents choisis, par exemple, parmi les argiles, avantageusement parmi les sepiolites, les bentonites et les hectorites.

Un mélange de ces agents peut être utilisé, c'est-à-dire un mélange d'au moins un agent épaississant d'origine inorganique et d'au moins un agent épaississant d'origine organique, ou un mélange d'agents épaississants d'origine organique ou un mélange d'agents épaississants d'origine inorganiques.

Avantageusement, l'agent épaississant est d'origine organique, encore plus avantageusement il s'agit d'au moins un éther de cellulose, mieux encore il s'agit de l'hydroxypropyléthylcellulose et/ou l'hydroxyéthylméthylcellulose. De préférence, il s'agit de l'hydroxyéthylméthylcellulose.

La quantité d'agent épaississant dans la composition selon l'invention est de 0,5 à 5% en poids par rapport au poids total de ladite composition.

La composition selon l'invention comprend, en outre, au moins une dispersion aqueuse de copolymères ou latex synthétique. Le latex synthétique est choisi parmi les copolymères en dispersion aqueuse issus de la copolymérisation d'au moins deux monomères choisis parmi l'éthylène, le propylène, le butylène, l'isoprène, le butadiène, le styrène, l'acrylonitrile, l'acide acrylique, l'acide méthacrylique, l'alkyl ester d'acide acrylique, l'alkyl ester d'acide méthacrylique, l'ester vinylique, l'acrylate de butyle, l'acrylate de 2-éthylhexyl, le méthacrylate de méthyle et le chlorure de vinyle. Avantageusement, il s'agit d'un copolymère styrène/acrylate de butyle, styrène/acrylate de 2-éthylhexyl ou styrène/butadiène.

La quantité de dispersion aqueuse de copolymères, appelée aussi latex synthétique, est de 5 à 30% en poids par rapport au poids total de ladite composition.

La composition selon l'invention comprend, en outre, au moins une charge minérale, choisie parmi les charges calcaires.

Ladite charge peut être choisie parmi les charges à granulométrie supérieure, les charges à granulométrie moyenne et les charges à granulométrie fine qui ont été définies plus haut.

On peut citer comme charge minérale calcaire conforme à l'invention : la poudre de marbre, la calcite broyée et la craie broyée. La granulométrie de ces charges minérales est avantageusement inférieure à 200 µm.

La quantité de charge minérale est de 30 à 70% en poids par rapport au poids total de ladite composition. Cependant le choix de la quantité et de la nature de la charge dépendra du produit final souhaité.

En outre, la composition selon l'invention, peut comprendre au moins un composé choisi parmi les agents anti-mousse, la soude, la potasse caustique, les agents biocides et leurs mélanges.

La composition selon l'invention, peut comprendre, en outre, de 0 à 2% d'au moins un agent anti-mousse, avantageusement de 0,01 à 2%, % exprimé en poids par rapport au poids total de ladite composition.

L'agent anti-mousse peut être choisi, par exemple, parmi les sous familles suivantes d'agents anti-mousse : (i) les mélanges d'alcool dodécylique et propylène glycol, (ii) les éthyloxates d'alcool gras, (iii) les dibutylphtalates, (iv) les dibutylphosphates, (v) les polymères de silicones, tels que le polydiméthylsilosane et les silicates modifiés, et (vi) les émulsions aqueuses de silane, de siloxane et/ou de silicone. Un exemple de préparation commerciale sous forme liquide d'un tel produit est le Dehydran®150 commercialisé par la société COGNIS.

La composition selon l'invention peut comprendre, en outre, de 0 à 3% de soude et/ou de potasse caustique, avantageusement de 0,1 à 3%, % exprimé en poids par rapport au poids total de ladite composition.

La composition selon l'invention peut comprendre, en outre, de 0 à 0,5% d'au moins un agent biocide, avantageusement de 0,1 à 0,5%, % exprimé en poids par rapport au poids total de ladite composition. L'agent biocide peut être choisi parmi les différentes molécules autorisées par la Directive 98/8/CE du Parlement européen et du Conseil du 16 février 1998 concernant la mise sur le marché des produits biocides. La société Thor commercialise des formulations basées sur ces molécules comme l'Acticide® MBS.

Selon un mode de réalisation, la composition selon l'invention comprend ou est constituée de en % exprimé en poids par rapport au poids total de ladite composition:
- 0,2 à 10% d'au moins un superplastifiant choisi parmi les superplastifiants à base d'acides carboxyliques constitué d'une chaîne principale de polycarboxylate sur laquelle sont greffées des groupements polyéther;
- 0,5 à 5% d'au moins un agent épaississant d'origine inorganique et/ou organique, avantageusement ledit agent épaississant d'origine organique étant choisi parmi les dérivés cellulosiques, avantageusement parmi les éthers de cellulose, la gomme de guar, l'amidon, la gomme arabique, les alginates, le xanthane, la carraghénine et les oxydes de polyéthylène et ledit agent d'origine inorganique étant choisi parmi les argiles, avantageusement parmi, les bentonites, les sepiolites et les hectorites ;
- 5 à 30% d'au moins un latex synthétique constitué d'un polymère en dispersion aqueuse, avantageusement issu de la copolymérisation d'au moins deux monomères choisis parmi l'éthylène, le propylène, le butylène, l'isoprène, le butadiène, le styrène, l'acrylonitrile, l'acide acrylique, l'acide méthacrylique, l'alkyl ester d'acide acrylique, l'alkyl ester d'acide méthacrylique, l'ester vinylique, l'acrylate de butyle, l'acrylate de 2-éthylhexyl, le méthacrylate de méthyle et le chlorure de vinyle;
- 30 à 70% d'au moins une charge minérale, choisie parmi les charges calcaires, avantageusement choisie parmi les charges minérales de moyenne ou de fine granulométrie c'est-à-dire < à 5mm, ladite charge pouvant être choisie parmi la poudre de marbre, la calcite broyée et la craie broyée;
- 20 à 60% d'eau ;
- 0,1 à 3% de soude et/ou de potasse caustique ;
- 0,1 à 0,5% d'au moins un agent biocide, conforme à l'invention ;
- 0,01 à 2% d'au moins un agent anti-mousse, conforme à l'invention.

L'invention concerne aussi un procédé de préparation d'une composition selon l'invention consistant à mélanger éventuellement dans de l'eau au moins un superplastifiant conforme à l'invention, au moins un agent épaississant d'origine inorganique et/ou organique conforme à l'invention, au moins une dispersion aqueuse de copolymère ou latex synthétique conforme à l'invention et au moins une charge minérale calcaire conforme à l'invention, avec éventuellement adjonction dans ledit mélange ainsi obtenu d'au moins un additif conforme à l'invention choisi parmi les agents biocides, les agents anti-mousse, la soude et la potasse caustique et leurs mélanges.

L'invention a également pour objet un procédé de mise en œuvre de la composition selon l'invention nécessitant de rajouter à la composition selon l'invention de 20 à 90% du poids de ladite composition, préférentiellement de 60 à 85% du poids de ladite composition, d'au moins un liant minéral afin de fabriquer un mortier, un béton ou un enduit de ragréage, particulièrement avantageux et prêt à être appliqué sur tout type de support tel que sol ou mur.

Selon un mode de réalisation, le procédé de mise en œuvre de la composition selon l'invention comprend une première phase de fabrication d'un mortier, d'un béton ou d'un enduit de ragréage comprenant une étape de mélange d'une composition selon l'invention avec au moins un liant minéral par l'utilisateur final.

La pâte de ragréage, le mortier ou le béton, objets de l'invention, sont le résultat du mélange de la composition selon l'invention mélangée directement audit liant minéral, sans nécessiter l'ajout d'eau.

L'invention concerne donc également l'utilisation d'une composition selon l'invention pour fabriquer un mortier, un béton, un enduit de ragréage, avantageusement un enduit de ragréage.

On peut citer comme liant minéral, la chaux, le plâtre ou encore les liants hydrauliques. On peut, par exemple, citer comme liants hydrauliques le ciment Portland seul ou mélangé (i) avec des liants hydrauliques latents comme le laitier ou (ii) avec des liants pouzzolaniques comme des cendres volantes ou des fumés de silice.

Selon un mode de réalisation particulièrement avantageux, le liant minéral est choisi parmi le ciment, la chaux et le plâtre.

De préférence, on ajoute de 0,2 à 0,9, plus préférentiellement de 0,6 à 0,85 et mieux encore 0,8 part dudit liant minéral pour une part de composition selon l'invention.

La composition selon l'invention, une fois melangée avec le liant minéral, est utile pour assembler entre eux pierres, briques et/ou parpaings, pour enduire un mur, pour réaliser un ragréage mural ou de sol et/ou pour réaliser une chape, avantageusement pour réaliser un ragréage mural ou enduire un mur.

D'autres avantages pourront encore apparaître à l'homme du métier à la lecture des exemples ci-dessous, donnés à titre illustratif.

### EXEMPLES

### I/ COMPOSITIONS

Des compositions selon l'invention ont été fabriquées : il s'agit des exemples 2 et 4. Des compositions non conformes à l'invention ont également été fabriquées, à titre de comparatifs : il s'agit des exemples-comparatifs 1 et 3.

Leurs formulations sont regroupées dans les tableaux 1 et 2 ci-dessous.

### 1.1. Compositions de l'Exemple-comparatif 1 et de l'Exemple 2

Les pourcentages sont exprimés en poids de composant par rapport au poids total de la composition.

**TABLEAU 1**

| | **fonction** | **Exemple-Comparatif 1** | **Exemple 2** |
|---|---|---|---|
| Dehydran® 150 ^{a} | Anti-mousse | 0,04% | 0,04% |
| Eau | | 42,66% | 42,16% |
| Acticide MBS ^{b} | biocide | 0,20% | 0,20% |
| Charge calcaire | charge | 48,72% | 48,90% |
| Latex Dow® 468 (Extrait sec=44%) ^{c} | plastifiant | 6,50% | 6,50% |
| Hydroxyde de sodium (Extrait sec=30%) | | 0,20% | 0,20% |
| Hydroxyéthylméthylcellulose. | épaississant | 1,68% | 1,00% |
| Sika Viscocrete® PC-2 ^{d} | Superplastifiant | 0% | 1,00% |

| | | | |
|---|---|---|---|
| ^{a} commercialisé par Cognis GmbH ^{b} mélange aqueux de méthyle et benzisothiazolinone commercialisé par Thor ^{c} copolymère styrène-butadiène en dispersion aqueuse commercialisé par Styron ^{d} Polycarboxylate modifié synthétisé par Sika | | | |

### I.2. Compositions de l'Exemple-comparatif 3 et de l'Exemple 4

Les pourcentages sont exprimés en poids de composant par rapport au poids total de la composition.

**TABLEAU 2**

| | **fonction** | **Exemple-Comparatif 3** | **Exemple 4** |
|---|---|---|---|
| Dehydran® 150 ^{a} | Anti-mousse | 0,02% | 0,02% |
| Eau | | 26,81% | 26,0% |
| Acticide MBS® ^{b} | biocide | 0,20% | 0,20% |
| Charge calcaire | charge | 30,14% | 30,09% |
| Latex Dow® 468 (Extrait sec=44%) ^{c} | plastifiant | 4,00% | 4,00% |
| Hydroxyde de sodium (Extrait sec=30%) | | 0,12% | 0,12% |
| Sable (granulométrie 0,1-0,3 mm) | agrégat | 38,30% | 38,30% |
| Hydroxyéthylméthylcellulose. | épaississant | 0,41% | 0,27% |
| Sika Viscocrete® PC-2 ^{d} | superplastifiant | 0% | 1,00% |

| | | | |
|---|---|---|---|
| ^{a} commercialisé par Cognis GmbH ^{b} mélange aqueux de méthyle et benzisothiazolinone commercialisé par Thor ^{c} copolymère styrène-butadiène en dispersion aqueuse commercialisé par Styron ^{d} Polycarboxylate modifié synthétisé par Sika | | | |

### I.3. Fabrication des compositions

La fabrication des compositions des Exemples 2 et 4 et des exemples-comparatifs 1 et 3 (voir tableaux 1 & 2 pour le détail des composants et des quantités), comprend les étapes suivantes reprises dans le tableau 3 ci-dessous :

**TABLEAU 3**

| | | |
|---|---|---|
| Les étapes 1 à 10 sont réalisées successivement, dans l'ordre indiqué (étape n°1 à 10) et ont toutes lieux à température ambiante. | | |

| Etape n° | Durée (min) | instructions |
|---|---|---|
| 1 | 10 | Introduction d'eau dans un réacteur |
| 2 | 0,5 | Introduction du biocide sous agitation modérée |
| 3 | 3 | Introduction de l'épaississant sous agitation modérée |
| 4 | 5 | Introduction de la charge calcaire sous agitation à grande vitesse |
| 5 | 4 | Mélange à grande vitesse de la composition ainsi obtenue |
| 6 | 0,5 | Introduction de l'agent anti-mousse sous agitation modérée |
| 7 | 2 | Introduction du latex synthétique sous agitation modérée |
| 8* | 3 | Introduction du superplastifiant sous agitation modérée |
| 9 | 1 | Introduction de la soude sous agitation à grande vitesse |
| 10 | 1 | Agitation modérée |

| | | |
|---|---|---|
| * l'étape n°8 n'a lieu que dans le cas des exemples 2 et 4 selon l'invention. | | |

Pour la préparation des compositions des exemples-comparatifs 1 et 3, ne comprenant pas de superplastifiant, le procédé de fabrication passe directement de l'étape 7 à l'étape 9.

Concernant les Exemples 2 et 4, on obtient à l'issue de la fabrication une pâte de ragréage pelliculaire qui est prête à être additionnée d'un liant minéral, tel que le ciment ou le plâtre afin de réaliser un enduit de ragréage.

### II/ APPLICATIONS DES COMPOSITIONS

Le ragréage d'une surface en béton brut avant peinture à l'intérieur d'un bâtiment a été effectué avec chacune des compositions des Exemples 2 et 4 (1 part) respectivement additivées avec du ciment (0,8 part). Après gâchage jusqu'à obtention d'un produit thixotrope, la pâte résultante a été appliquée à la truelle et à la taloche sur support peu bullé et sec par un spécialiste du ragréage ayant 30 ans d'expérience dans ce métier.

Les épaisseurs préconisées pour une bonne utilisation de la composition de l'Exemple 2 selon l'invention sont de 0,3 à 5 mm lorsqu'elle est mélangée à du ciment et de 0,3 à 50 mm lorsqu'elle est mélangée à du plâtre. La consommation en composition est d'environ 0,8 kg/m²/mm d'épaisseur.

Les épaisseurs préconisées pour une bonne utilisation de la composition de l'Exemple 4 selon l'invention sont de 1,5 à 10 mm lorsqu'elle est mélangée à du ciment et de 1,5 à 50 mm lorsqu'elle est mélangée à du plâtre. La consommation en composition est d'environ 0,9 kg/m²/mm d'épaisseur.

Parallèlement, sur un même type de surface et dans les mêmes conditions opératoires, le spécialiste a appliqué une composition de Sider Cim® commercialisée par Sika.

Au terme de l'application sur les surfaces à traiter, le spécialiste rend compte d'une plus grande aisance d'application des compositions selon l'invention additivées par rapport à la composition de Sider Cim® : le lissage s'effectue en particulier plus facilement. Ceci est directement lié aux propriétés physiques particulièrement avantageuses et à la rhéologie des compositions selon l'invention particulièrement adaptées à leur emploi en tant qu'enduit de ragréage.

En outre, après séchage et durcissement, l'aspect du mur enduit par la composition de l'Exemple 2 additivée est considéré comme plus lisse que l'aspect du mur traité par le Sider Cim®.

Le spécialiste constate qu'il est ainsi possible de recouvrir 20% de surface supplémentaire avec les compositions selon l'invention par rapport au Sider Cim®.

### III/ MESURES DE PLASTICITE

Des compositions de pâte de ragréage : Mélange A, non conforme à l'invention, et Mélange B, selon l'invention, ont été fabriquées par ajout de ciment dans les proportions indiquées dans, le tableau 4 ci-dessous avec respectivement une composition de l'Exemple-Comparatif 1 et une composition de l'Exemple 2 définies dans le tableau 1 ci-dessus. La plasticité de chaque Mélange A et B a ensuite été mesurée selon la norme EN 13395-1.

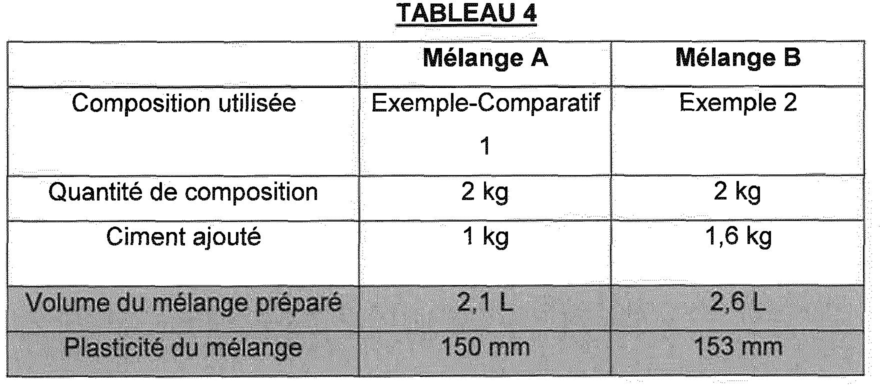

Les résultats de plasticité dans le tableau 4 ci-dessus montrent que la composition selon l'invention permet d'incorporer plus de ciment pour une même plasticité finale du mélange obtenu. La plasticité traduit la consistance du mélange. Ainsi, pour une même quantité de composition selon l'invention utilisée, il est possible de préparer une quantité de mélange final prêt à l'emploi plus élevée au travers d'un ajout plus important de ciment sans dégrader l'applicabilité du produit. Le ciment étant bien moins cher que la composition selon l'invention, le coût par mètre carré de mélange final appliqué s'en voit réduit.

## Revendications

1. Composition comprenant en % exprimé en poids par rapport au poids total de ladite composition:
• 0,2 à 10% d'au moins un superplastifiant choisi parmi les superplastifiants à base d'acides carboxyliques constitué d'une chaîne principale de polycarboxylate sur laquelle sont greffées des groupements polyéther;
• 0,5 à 5% d'au moins un agent épaississant d'origine inorganique et/ou organique;
• 5 à 30 % d'au moins une dispersion aqueuse de copolymères ou latex synthétique issus de la copolymérisation d'au moins deux monomères choisis parmi l'éthylène, le propylène, le butylène, l'isoprène, le butadiène, le styrène, l'acrylonitrile, l'acide acrylique, l'acide méthacrylique, l'alkyl ester d'acide acrylique, l'alkyl ester d'acide méthacrylique, l'ester vinylique, l'acrylate de butyle, l'acrylate de 2-éthylhexyl, le méthacrylate de méthyle et le chlorure de vinyle;
• 30 à 70% d'au moins une charge minérale choisie parmi les charges calcaires;
• 0 à 60% d'eau, avantageusement de 20 à 60% ou de 25 à 50%.

2. Composition selon la revendication 1 comprenant, en outre, au moins un composé choisi parmi les agents biocides, les agents anti-mousse, la soude, la potasse caustique et leurs mélanges.

3. Composition selon l'une quelconque des revendications précédentes, dans laquelle le superplastifiant est un polymère d'acide (méth)acrylique et/ou d'acide maléique portant des fonctions ioniques de type carboxylique et/ou des chaînons pendants de type (alkoxy)polyalkylène glycol, avantageusement lesdits chaînons pendants de type (alkoxy)polyalkylène glycol sont choisis parmi les chainons polyéthylène glycol et polypropylène glycol.

4. Composition selon l'une quelconque des revendications précédentes, dans laquelle l'agent épaississant d'origine organique est choisi parmi les dérivés cellulosiques, avantageusement parmi les éthers de cellulose, la gomme de guar, l'amidon, la gomme arabique, les alginates, le xanthane, la carraghénine et les oxydes de polyéthylène et dans laquelle l'agent d'origine inorganique est choisi parmi les argiles, avantageusement parmi, les bentonites, les sepiolites et les hectorites.

5. Composition selon la revendication précédente, dans laquelle l'agent épaississant est choisi parmi l'hydroxypropyléthylcellulose et l'hydroxyéthylméthylcellulose, avantageusement il s'agit de l'hydroxyéthylméthylcellulose.

6. Composition selon l'une quelconque des revendications précédentes, dans laquelle la charge minérale calcaire est choisie parmi la poudre de marbre, la calcite broyée et la craie broyée.

7. Composition selon l'une quelconque des revendications précédentes, dans laquelle le latex synthétique est choisi parmi les copolymère styrène/acrylate de butyle, styrène/acrylate de 2-éthylhexyl et styrène/butadiène.

8. Composition selon l'une quelconque des revendications 2 à 7, comprenant de 0,01 à 2% d'au moins un agent anti-mousse, % exprimé en poids par rapport au poids total de ladite composition, avantageusement l'agent anti-mousse est choisi parmi (i) les mélanges d'alcool dodécylique et propylène glycol, (ii) les éthyloxates d'alcool gras, (iii) les dibutylphtalates, (iv) les dibutylphosphates, (v) les polymères de silicones et (vi) les émulsions aqueuses de silane, de siloxane et/ou de silicone.

9. Composition selon l'une quelconque des revendications 2 à 8, comprenant de 0,1 à 3% de soude et/ou de potasse caustique, % exprimé en poids par rapport au poids total de ladite composition.

10. Composition selon l'une quelconque des revendications 2 à 9, comprenant de 0,1 à 0,5% d'au moins un agent biocide, % exprimé en poids par rapport au poids total de ladite composition.

11. Composition selon l'une quelconque des revendications précédentes, comprenant (% exprimé en poids par rapport au poids total de la composition):
• 0,2 à 10% d'au moins un superplastifiant ;
• 0,5 à 5% d'au moins un agent épaississant d'origine inorganique et/ou organique ;
• 5 à 30% d'au moins un latex synthétique ;
• 30 à 70% d'au moins une charge minérale ;
• 20 à 60% d'eau ;
• 0,1 à 3% de soude et/ou de potasse caustique ;
• 0,1 à 0,5% d'au moins un agent biocide ;
• 0,01 à 2% d'au moins un agent anti-mousse.

12. Utilisation d'une composition selon l'une quelconque des revendications 1 et 11 pour fabriquer un mortier, un béton ou un enduit de ragréage, avantageusement un enduit de ragréage.

13. Utilisation selon la revendication 12 dans laquelle ledit mortier, ledit béton ou ledit enduit de ragréage sont utiles pour assembler entre eux pierres, briques et/ou parpaings, pour enduire un mur, pour réaliser un ragréage mural ou de sol et/ou pour réaliser une chape, avantageusement pour réaliser un ragréage mural ou enduire un mur.

14. Procédé de préparation d'un mortier, d'un béton ou d'un enduit de ragréage comprenant une étape de mélange d'une composition selon l'une des revendications 1 à 11 avec au moins un liant minéral choisi (i) parmi la chaux, le plâtre et les liants hydrauliques ou (ii) parmi le ciment Portland, seul ou mélangé (i) avec des liants hydrauliques latents ou (ii) avec des liants pouzzolaniques ou (iii) parmi, le ciment, la chaux et le plâtre.

15. Procédé selon la revendication précédente, dans lequel 0,2 à 0,9 ou 0,6 à 0,85 parts dudit au moins un liant minéral sont rajoutées à 1 part de ladite composition.

## Patentansprüche

1. Zusammensetzung, die ausgedrückt in Gewichts-% bezogen auf das Gesamtgewicht der Zusammensetzung umfasst:
▪ 0,2 bis 10% von mindestens einem Fließmittel, das ausgewählt ist aus Fließmitteln auf Basis von Carbonsäuren und aus einer Polycarboxylat-Hauptkette gebildet ist, auf die Polyethergruppen aufgepfropft sind;
▪ 0,5 bis 5% von mindestens einem Verdickungsmittel anorganischen und/oder organischen Ursprungs;
▪ 5 bis 30 % von mindestens einer wässrigen Dispersion aus Copolymeren oder Syntheselatex, die aus der Copolymerisation von mindestens zwei Monomeren hervorgehen, die ausgewählt sind aus Ethylen, Propylen, Butylen, Isopren, Butadien, Styrol, Acrylnitril, Acrylsäure, Methacrylsäure, Acrylsäurealkylester, Methacrylsäurealkylester, Vinylester, Butylacrylat, 2-Ethylhexylacrylat, Methylmethacrylat und Vinylchlorid;
▪ 30 bis 70% von mindestens einem mineralischen Füllstoff, der aus kalkhaltigen Füllstoffen ausgewählt ist;
▪ 0 bis 60% Wasser, vorteilhafterweise 20 bis 60% oder 25 bis 50%.

2. Zusammensetzung nach Anspruch 1, die ferner mindestens eine Verbindung umfasst, die aus bioziden Mitteln, Antischaummitteln, Natronlauge, Kaliumhydroxid und ihren Mischungen ausgewählt ist.

3. Zusammensetzung nach einem der vorhergehenden Ansprüche, wobei das Fließmittel ein Polymer aus (Meth)acrylsäure und/oder Maleinsäure ist, das ionische Carboxylgruppen und/oder Seitenketten vom Typ (Alkoxy)polyalkylenglycol trägt, wobei die Seitenketten vom Typ (Alkoxy)polyalkylenglycol vorteilhafterweise aus Polyethylenglycol- und Polypropylenglycolketten ausgewählt sind.

4. Zusammensetzung nach einem der vorhergehenden Ansprüche, wobei das Verdickungsmittel organischen Ursprungs aus Cellulosederivaten ausgewählt ist, vorzugsweise aus Celluloseethern, Guarkernmehl, Stärke, Gummi arabicum, Alginaten, Xanthan, Carrageen und Polyethylenoxiden, und wobei das Mittel anorganischen Ursprungs ausgewählt ist aus Tonmineralen, vorteilhafterweise aus Bentoniten, Sepiolithen und Hektoriten.

5. Zusammensetzung nach dem vorhergehenden Anspruch, wobei das Verdickungsmittel ausgewählt ist aus Hydroxypropylethylcellulose und Hydroxyethylmethylcellulose, es sich vorteilhafterweise um Hydroxyethylmethylcellulose handelt.

6. Zusammensetzung nach einem der vorhergehenden Ansprüche, wobei der kalkhaltige mineralische Füllstoff ausgewählt ist aus Marmormehl, zerkleinertem Calciumcarbonat und zerkleinerter Kreide.

7. Zusammensetzung nach einem der vorhergehenden Ansprüche, wobei der Syntheselatex ausgewählt ist aus Styrol-/Butylacrylat-, Styrol-/2-Ethylhexylacrylat- und Styrol-/Butadien-Copolymeren.

8. Zusammensetzung nach einem der Ansprüche 2 bis 7, die 0,01 bis 2% von mindestens einem Antischaummittel umfasst, ausgedrückt in Gewichts-% bezogen auf das Gesamtgewicht der Zusammensetzung, wobei das Antischaummittel vorteilhafterweise ausgewählt ist aus (i) Mischungen aus Dodecanol und Propylenglycol, (ii) Fettalkoholethoxylaten, (iii) Dibutylphthalaten, (iv) Dibutylphosphaten, (v) Silikonpolymeren und (vi) wässrigen Silan-, Siloxan- und/oder Silikonemulsionen.

9. Zusammensetzung nach einem der Ansprüche 2 bis 8, die 0,1 bis 3% Natronlauge und/oder Kaliumhydroxid umfasst, ausgedrückt in Gewichts-% bezogen auf das Gesamtgewicht der Zusammensetzung.

10. Zusammensetzung nach einem der Ansprüche 2 bis 9, die 0,1 bis 0,5% von mindestens einem bioziden Mittel umfasst, ausgedrückt in Gewichts-% bezogen auf das Gesamtgewicht der Zusammensetzung.

11. Zusammensetzung nach einem der vorhergehenden Ansprüche, die (ausgedrückt in Gewichts-% bezogen auf das Gesamtgewicht der Zusammensetzung) umfasst:
▪ 0,2 bis 10% von mindestens einem Fließmittel;
▪ 0,5 bis 5% von mindestens einem Verdickungsmittel anorganischen und/oder organischen Ursprungs;
▪ 5 bis 30% von mindestens einem Syntheselatex;
▪ 30 bis 70% von mindestens einem mineralischen Füllstoff;
▪ 20 bis 60% Wasser;
▪ 0,1 bis 3% Natronlauge und/oder Kaliumhydroxid;
▪ 0,1 bis 0,5% von mindestens einem bioziden Mittel;
▪ 0,01 bis 2% von mindestens einem Antischaummittel.

12. Verwendung einer Zusammensetzung nach einem der Ansprüche 1 und 11 zum Herstellen eines Mörtels, eines Betons oder einer Spachtelmasse, vorteilhafterweise einer Spachtelmasse.

13. Verwendung nach Anspruch 12, wobei der Mörtel, der Beton oder die Spachtelmasse zum Verbinden von Steinen, Pflastersteinen und/oder Betonsteinen miteinander, zum Verputzen einer Wand, zum Spachteln von Wänden oder Böden und/oder zum Herstellen eines Estrichs, vorteilhafterweise zum Spachteln von Wänden oder Verputzen einer Wand nutzbar ist.

14. Verfahren zur Herstellung eines Mörtels, eines Betons oder einer Spachtelmasse, das einen Schritt zum Mischen einer Zusammensetzung nach einem der Ansprüche 1 bis 11 mit mindestens einem mineralischen Bindemittel umfasst, ausgewählt (i) aus Kalk, Gips und hydraulischen Bindemitteln oder (ii) aus Portlandzement, allein oder gemischt (i) mit latent hydraulischen Bindemitteln oder (ii) mit puzzolanischen Bindemitteln, oder (iii) aus Zement, Kalk und Gips.

15. Verfahren nach dem vorhergehenden Anspruch, wobei 0,2 bis 0,9 oder 0,6 bis 0,85 Teile des mindestens einen mineralischen Bindemittels 1 Teil der Zusammensetzung zugegeben werden.

## Claims

1. Composition including as % expressed by weight relative to the total weight of said composition:
• 0.2-10% of at least one superplasticizer selected from the superplasticizers based on carboxylic acids and consisting of a polycarboxylate main chain onto which polyether groups are grafted;
• 0.5-5% of at least one thickener of inorganic and/or organic origin;
• 5-30% of at least one aqueous dispersion of copolymers or synthetic latex, which originate from the copolymerization of at least two monomers selected from ethylene, propylene, butylene, isoprene, butadiene, styrene, acrylonitrile, acrylic acid, methacrylic acid, acrylic acid alkyl ester, methacrylic acid alkyl ester, vinyl ester, butyl acrylate, 2-ethylhexyl acrylate, methyl methacrylate, and vinyl chloride;
• 30-70% of at least one mineral filler selected from calcareous fillers;
• 0-60% water, advantageously 20-60% or 25-50%.

2. Composition according to Claim 1, including, in addition, at least one compound selected from the biocidal agents, the antifoaming agents, sodium hydroxide, potassium hydroxide, and their mixtures.

3. Composition according to either one of the previous claims, in which the superplasticizer is a polymer of (meth)acrylic acid and/or of maleic acid, bearing ionic carboxylic functions and/or (alkoxy)polyalkylene glycol pendant side chains; advantageously said (alkoxy)polyalkylene glycol pendant side chains are selected from the polyethylene glycol and polypropylene glycol side chains.

4. Composition according to any one of the previous claims, in which the thickener of organic origin is selected from the cellulose derivatives, advantageously from the cellulose ethers, guar gum, starch, gum arabic, the alginates, xanthan gum, carrageenan, and the polyethylene oxides, and in which the agent of inorganic origin is selected from the clays, advantageously from the bentonites, the sepiolites, and the hectorites.

5. Composition according to the preceding claim, in which the thickener is selected from hydroxypropylethylcellulose and hydroxyethylmethylcellulose; advantageously it is hydroxyethylmethylcellulose.

6. Composition according to any one of the previous claims, in which the calcareous mineral filler is selected from marble powder, crushed calcite and crushed chalk.

7. Composition according to any one of the previous claims, in which the synthetic latex is selected from the styrene/butyl acrylate, styrene/2-ethylhexyl acrylate and styrene/butadiene copolymers.

8. Composition according to any one of Claims 2-7, including 0.01-2% of at least one antifoaming agent, % expressed by weight relative to the total weight of said composition; advantageously the antifoaming agent is selected from (i) the mixtures of dodecyl alcohol and propylene glycol, (ii) the fatty alcohol ethoxylates, (iii) the dibutyl phthalates, (iv) the dibutyl phosphates, (v) the polymers of silicones, and (vi) the aqueous emulsions of silane, siloxane and/or silicone.

9. Composition according to any one of Claims 2-8, including 0.1-3% sodium hydroxide and/or potassium hydroxide, % expressed by weight relative to the total weight of said composition.

10. Composition according to any one of Claims 2-9, including 0.1-0.5% of at least one biocidal agent, % expressed by weight relative to the total weight of said composition.

11. Composition according to any one of the previous claims, including (% expressed by weight relative to the total weight of the composition):
• 0.2-10% of at least one superplasticizer;
• 0.5-5% of at least one thickener of inorganic and/or organic origin;
• 5-30% of at least one synthetic latex;
• 30-70% of at least one mineral filler;
• 20-60% water;
• 0.1-3% sodium hydroxide and/or potassium hydroxide;
• 0.1-0.5% of at least one biocidal agent; and
• 0.01-2% of at least one antifoaming agent.

12. Use of a composition according to any one of Claims 1 and 11, for manufacturing a mortar, a concrete, or a finishing coating, advantageously a finishing coating.

13. Use according to Claim 12, in which said mortar, said concrete or said finishing coating are useful for assembling together stones, bricks and/or cinder blocks, for coating a wall, for producing a wall finishing or a floor finishing and/or for producing a screed, advantageously for producing a wall finishing or coating a wall.

14. Method for preparing a mortar, a concrete or a finishing coating, including a step of mixing a composition according to one of Claims 1-11 with at least one mineral binder selected (i) from lime, plaster, and the hydraulic binders, or (ii) from Portland cement, alone or mixed (i) with latent hydraulic binders, or (ii) with pozzolanic binders, or (iii) from cement, lime and plaster.

15. Method according to the previous claim, in which 0.2-0.9 or 0.6-0.85 part of said at least one mineral binder is added to 1 part of said composition.
